# FASCICULE DE BREVET EUROPEEN

(11) **EP 0 830 820 B1**
(45) Date de publication et mention de la délivrance du brevet: **15.05.2002**
(21) Numéro de dépôt: 96202648.0
(22) Date de dépôt: 23.09.1996
(51) Int. Cl.: A23C 11/10, A23L 1/211, A23L 1/36

(54) **Fabrication d'un lait en poudre végétal**
Herstellung eines pflanzlichen Milchpulvers
Preparation of a vegetable milk powder

(43) Date de publication de la demande: 25.03.1998
(73) Titulaire: SOCIETE DES PRODUITS NESTLE S.A., 1800 Vevey (CH)
(72) Inventeur: Ansermet, François, Abidjan 01 (CI); Badertscher, Ernest, 1350 Orbe (CH); Tripier, Nadine, 1446 Baulmes (CH)
(74) Mandataire: Wavre, Claude-Alain

(56) Documents cités:
- EP-A- 0 479 596
- WO-A-93/16608
- CH-A- 401 656
- FR-A- 2 331 288
- GB-A- 1 443 451
- US-A- 3 941 890
- CHEMICAL ABSTRACTS, vol. 88, no. 25, 19 Juin 1978 Columbus, Ohio, US; abstract no. 188523, XP002025171 & HU 14 184 A (PHYLAXIA OLTOANYAG- ES TAPSZERTERMELO VALLALAT)
- DATABASE WPI Derwent Publications Ltd., London, GB; AN 93-128844 XP002025172 & JP 05 064 562 A (HONJO M)
- PATENT ABSTRACTS OF JAPAN vol. 18, no. 471 (C-1245), 2 Septembre 1994 & JP 06 153841 A (KIBUN FOOD CHEMIFA CO)

## Description

La présente invention a pour objet un procédé de fabrication d'un lait en poudre végétal, le lait susceptible d'être obtenu par le procédé et son utilisation dans le domaine alimentaire.

On connaît depuis longtemps l'obtention de succédanés de lait de mammifères à partir de matière végétale.

FR 2331288 décrit plus particulièrement un procédé de fabrication d'un lait concentré sucré végétal, dans lequel on effectue tout d'abord une hydrolyse partielle de protéines de soya puis on mélange l'hydrolysat de protéines végétales ainsi obtenu avec, notamment, du sucre et de la matière grasse.

FR 2184519 décrit un procédé de fabrication de céréales pour petit déjeuner, dans lequel on fait une hydrolyse partielle des protéines de soya puis on les extrude sous forme de boudin que l'on découpe en pastilles que l'on fait gonfler de manière à obtenir des flocons.

La présente invention a pour but de proposer un procédé de fabrication, par des moyens particulièrement simples, d'un lait en poudre végétal présentant en particulier une teneur en protéines et en lipides semblables à celles d'un lait de vache, entier ou écrémé, et pouvant être utilisé, notamment, comme ingrédient de base dans une composition alimentaire.

A cet effet, dans le procédé de fabrication d'un lait en poudre végétal selon la présente invention, on prépare un mélange aqueux présentant une teneur en matière sèche de 35-40% et comprenant, en % en poids de matière sèche, 50-65% de graines d'oléagineuses ou de légumineuses sous forme de gruau ou de farine, 0-15% de matières grasses, 15-25% de sucre, 5-10% d'un agent de séchage amylacé et 1-3% de sel, on hydrolyse enzymatiquement le mélange, on le traite thermiquement, et on le sèche sur cylindre.

Ce procédé permet de manière surprenante de recourir au séchage sur cylindre pour fabriquer un lait en poudre végétal qui présente de hautes qualités nutritives, un goût agréable et une texture lisse, qui se mélange facilement à d'autres ingrédients alimentaires et qui peut être facilement utilisé comme ingrédient de base dans la préparation de compositions alimentaires.

Dans la suite de l'exposé, on emploiera l'expression "séchage sur cylindre" pour désigner une opération de séchage pendant laquelle on forme un film de matière liquide ou pâteuse à sécher sur au moins un cylindre chauffé, on détache le film séché du cylindre et on le réduit alors en flocons.

Pour mettre en oeuvre le présent procédé, on peut choisir ladite matière végétale riche en protéines parmi les graines d'oléagineuses et de légumineuses telles que le soya ou les arachides, sous forme de gruau ou de farine, par exemple. On utilise de préférence une farine de soya entière ou dégraissée.

De même, on peut utiliser une graisse ou un mélange de graisses végétales présentant un point de fusion compris entre 20 et 37° C, de manière à faciliter le séchage sur cylindre, par exemple. On peut notamment utiliser l'huile de palme.

De préférence, on utilise un sucre non réducteur, de manière à éviter la réaction de Maillard lors du séchage sur cylindre. Ledit sucre peut être le saccharose, par exemple.

Ledit agent de séchage amylacé peut être une farine de céréale ou un amidon natif ou partiellement hydrolysé, notamment une farine de riz ou la maltodextrine, par exemple. Il permet de faciliter le séchage sur cylindre.

Ledit sel peut être notamment du chlorure de sodium et/ou du chlorure de potassium.

De préférence, on hydrolyse ledit mélange avec une protéase neutre ou alcaline d'origine fongique ou microbienne, et l'on traite thermiquement le mélange par injection de vapeur.

De préférence, on hydrolyse ledit mélange à pH 6,0-11,0 à 50-75° C durant 5-15 min, de manière à réduire sa viscosité, on le traite thermiquement par injection de vapeur à 140-160° C durant 30 s à 2 min, de manière à le pasteuriser et à inactiver les enzymes et on le sèche sur cylindre chauffé à la vapeur saturée à 170-195° C durant 5-30 s.

De préférence, par la mise en oeuvre du procédé selon la présente invention, on obtient un lait en poudre végétal dont la teneur en lipides et en protéines est semblable à celle d'un lait de vache, notamment d'un lait de vache entier ou écrémé.

La présente invention a également pour objet l'utilisation du lait en poudre végétal susceptible d'être obtenu selon le présent procédé pour la fabrication d'un produit alimentaire. On peut envisager de nombreuses applications alimentaires dans lesquelles ce lait peut être utilisé comme ingrédient de base, par exemple. On peut notamment utiliser ce lait comme ingrédient de base dans une composition alimentaire destinée à l'alimentation infantile, par exemple. De même, on peut utiliser ledit lait comme ingrédient de base dans la composition d'une boisson nutritive, par exemple. On peut également utiliser ce lait pour la fabrication de substituts de produits laitiers, notamment de yogourts ou de fromages, par exemple.

Le procédé de fabrication d'un lait en poudre végétal et l'utilisation de ce lait pour la fabrication de produits alimentaires sont décrits plus en détails dans les exemples ci-après. Dans ces exemples, les pourcentages et parties sont donnés en poids, sauf indication contraire.

### Exemple 1

On prépare un mélange aqueux présentant une teneur en eau de 60% et comprenant, en % en poids de matière sèche, 58% de farine de soya entière, 13% d'huile de palme, 18% de saccharose, 6% de farine de riz et 2% de chlorure de sodium.

On hydrolyse ce mélange avec de l'alcalase 2.4L (Novo ferments) à pH 7 à 60° C pendant 7 min puis on le traite thermiquement par injection de vapeur à 160° C durant 40 s et on le sèche sur cylindre chauffé à la vapeur saturée à 180° C durant 10 s.

On obtient ainsi un lait en poudre végétal entier présentant une teneur en eau résiduelle de 2,5%.

La composition de ce lait est la suivante:
- protéines 26%
- lipides 26%
- fibres végétales 6,7%
- cendres 4,9%
- hydrates de carbone 33,9%
- teneur en eau 2,5%

### Exemple 2

On prépare un mélange aqueux présentant une teneur en eau de 60% et comprenant, en % en poids de matière sèche, 63,1% de farine de soya dégraissée, 0,3% d'huile de palme, 23% de saccharose, 9% de farine de riz et 2% de chlorure de sodium.

On hydrolyse ce mélange avec l'alcalase 2.4L à pH 7 à 60° C pendant 7 min puis on le traite thermiquement par injection de vapeur à 140° C durant 1 min et on le sèche sur cylindre chauffé à la vapeur saturé à 180° C durant 10 s.

On obtient ainsi un lait en poudre végétal écrémé présentant une teneur en eau résiduelle de 2,5%.

La composition de ce lait est la suivante:
- protéines 35%
- lipides 1%
- fibres végétales 11,9%
- cendres 6,3%
- hydrates de carbone 43,9%
- teneur en eau 2,5%

### Exemple 3

On utilise le lait en poudre végétal entier tel qu'obtenu à l'exemple 1 pour la fabrication d'une composition alimentaire en poudre.

Pour ce faire, on mélange à sec 50% de lait en poudre végétal entier avec 24% de farine de maïs, 25% de saccharose, 0,5% d'arôme vanille et 0,5% de sels minéraux.

On obtient ainsi une composition alimentaire en poudre que le consommateur peut reconstituer dans de l'eau et cuire, de manière à obtenir une bouillie onctueuse.

### Exemple 4

On utilise le lait en poudre végétal entier, tel qu'obtenu à l'exemple 1, comme ingrédient de base pour la fabrication d'un lait de suite.

On entend par l'expression "lait de suite", un lait dont on peut ajuster la teneur en protéines à une valeur désirée et qui est supplémenté en vitamines, en fer, en calcium et en acides gras essentiels. Les laits de suite sont données à l'enfant dès l'âge de 4-6 mois.

Pour ce faire, on prépare tout d'abord un mélange contenant, en % en poids de matière sèche, 67% de farine de maïs, 29% de saccharose, 2% d'huile végétale, 1% de lécithine de soja et 1% de chlorure de potassium. La teneur en eau de ce mélange est de 55%.

On effectue une hydrolyse enzymatique à l'aide d'alpha-amylase à pH7, à 66° C pendant 1 min, puis on traite thermiquement le mélange par injection de vapeur à 150° C durant 1 min.

Enfin, on sèche le mélange sur cylindre chauffé à la vapeur saturée à 190° C durant 5 s.

On mélange à sec 46% de la poudre ainsi obtenue avec 52% de lait en poudre végétal entier, 1% d'arôme de vanille, 0,5% de sels minéraux et 0,5% de vitamines.

On obtient ainsi un lait de suite en poudre que le consommateur peut reconstituer dans de l'eau à 60° C.

### Exemple 5

On utilise le lait en poudre végétal entier, tel qu'obtenu à l'exemple 1, comme ingrédient de base dans la préparation d'une boisson à l'arôme vanille.

A cet effet, on mélange à sec 60% de lait en poudre végétal entier avec 40% de saccharose, 0,1% de sel et 0,3% d'arôme vanille.

On conditionne la poudre ainsi préparée.

Pour la préparation de la boisson à l'arôme vanille, le consommateur mélange la poudre dans de l'eau.

### Exemple 6

On utilise le lait en poudre végétal écrémé, tel qu'obtenu à l'exemple 2, comme ingrédient de base dans la fabrication d'une formule infantile complète.

Pour ce faire, on prépare un mélange comprenant, en % en poids de matière sèche, 70% de farine de riz, 14% d'huile de palme, 14% de saccharose, 1% de lécithine de soya et 1% de chlorure de sodium. La teneur en eau de ce mélange est de 55%.

On effectue une hydrolyse enzymatique à l'aide d'alpha-amylase à pH7, à 80° C pendant 1 min, puis on traite thermiquement le mélange par injection de vapeur à 140° C durant 1 min.

Enfin, on sèche le mélange sur cylindre chauffé à la vapeur saturée à 180° C durant 10 s.

On mélange à sec 57,5% de la poudre ainsi obtenue avec 34% de lait en poudre végétal écrémé, 7% de saccharose, 0,1% d'arôme de vanille, 0,7% de sels minéraux et 0,7% de vitamines.

On obtient ainsi une formule infantile complète en poudre pouvant être reconstituée instantanément dans de l'eau à 60° C par le consommateur.

## Revendications

1. Procédé de fabrication d'un lait en poudre végétal, dans lequel on prépare un mélange aqueux présentant une teneur en matière sèche de 35-40% et comprenant, en % en poids de matière sèche, 50-65% de graines d'oléagineuses ou de légumineuses sous forme de gruau ou de farine, 0-15% de matière grasse, 15-25% de sucre, 5-10% d'un agent de séchage amylacé et 1-3% de sel, on l'hydrolyse enzymatiquement, on le traite thermiquement et on le sèche sur cylindre.

2. Procédé selon la revendication 1, dans lequel ladite matière riche en protéines est une farine de graines d'oléagineuses ou de légumineuses, notamment une farine de soya entière ou dégraissée, ladite matière grasse est une graisse ou un mélange de graisses végétales présentant un point de fusion compris entre 20 et 37° C, ledit sucre est le saccharose, ledit agent de séchage amylacé est une farine de céréale ou un amidon natif ou partiellement hydrolysé, notamment une farine de riz ou la maltodextrine et ledit sel est du chlorure de sodium et/ou du chlorure de potassium.

3. Procédé selon la revendication1, dans lequel on hydrolyse ledit mélange avec une protéase neutre ou alcaline d'origine fongique ou microbienne, et l'on traite thermiquement le mélange par injection de vapeur.

4. Procédé selon la revendication 3, dans lequel on hydrolyse le mélange à pH 6,0-11,0 à 50-75° C durant 5-15 min, on le traite thermiquement par injection de vapeur à 140-160° C durant 30 s à 2 min et on le sèche sur cylindre chauffé à la vapeur saturée à 170-195°C durant 5-30 s.

5. Lait en poudre végétal susceptible d'être obtenu par le procédé selon l'une des revendications 1-4.

6. Lait en poudre végétal selon la revendication 5, présentant une teneur en protéines et en lipides semblable à celle du lait de vache, notamment d'un lait de vache entier ou écrémé.

7. Utilisation d'un lait selon l'une des revendications 5 et 6 pour la fabrication d'un produit alimentaire.

## Claims

1. Process for manufacturing a powdered plant milk, in which an aqueous mixture is prepared which has a dry matter content of 35-40% and which comprises, as a percentage by weight of dry matter, 50-65% of oleaginous or leguminous plant seeds in the form of meal or flour, 0-15% fats, 15-25% sugar, 5-10% of a starchy drying agent and 1-3% salt, and the mixture is hydrolysed enzymatically, heat-treated and roll-dried.

2. Process according to Claim 1, in which the said protein-rich material is a flour of oleaginous or leguminous plant seeds, especially a whole or defatted soybean flour, the said fats are a plant fat or a mixture of plant fats with a melting point of between 20 and 37°C, the said sugar is sucrose, the said starchy drying agent is a cereal flour or a native or partially hydrolysed starch, especially a rice flour or maltodextrin, and the said salt is sodium chloride and/or potassium chloride.

3. Process according to Claim 1, in which the said mixture is hydrolysed with a neutral or alkaline protease of fungal or microbial origin, and the mixture is heat-treated by injecting steam.

4. Process according to Claim 3, in which the mixture is hydrolysed at pH 6.0-11.0 and at 50-75°C for 5-15 minutes, it is heat-treated by injecting steam at 140-160°C for 30 seconds to 2 minutes, and it is dried on a roll heated with saturated steam at 170-195°C for 5-30 seconds.

5. Powdered plant milk which may be obtained by the process according to one of Claims 1-4.

6. Powdered plant milk according to Claim 5, whose protein and lipid contents are similar to those of cow's milk, especially a whole or skimmed cow's milk.

7. Use of a milk according to either of Claims 5 and 6 to manufacture a food product.

## Patentansprüche

1. Verfahren zur Herstellung von pflanzlichem Milchpulver, bei dem man eine wässrige Mischung mit einem Trockenmassegehalt von 35-40% herstellt, die, in Gew.-% der Trockenmasse, 50-65% Samen von Ölpflanzen oder Hülsenfrüchten in Form von Schrot oder Mehl, 0-15% Fett, 15-25% Zucker, 5-10% eines stärkehaltigen Trocknungsmittels und 1-3% Salz enthält, sie enzymatisch hydrolysiert, sie thermisch behandelt und sie auf einer Walze trocknet.

2. Verfahren nach Anspruch 1, in dem das an Proteinen reiche Material Mehl von Ölpflanzen- oder Hülsenfrüchtesamen, insbesondere Sojavollmehl oder entfettetes Sojamehl, ist, das Fett ein Pflanzenfett oder eine Mischung von Pflanzenfetten mit einem Schmelzpunkt zwischen 20 und 37°C ist, der Zucker Saccharose ist, das stärkehaltige Trocknungsmittel ein Getreidemehl oder eine native oder partiell hydrolysierte Stärke, insbesondere Reismehl oder Maltodextrin, ist und das Salz Natriumchlorid und/oder Kaliumchlorid ist.

3. Verfahren nach Anspruch 1, in dem man diese Mischung mit einer neutralen oder alkalischen, von Pilzen oder Mikroben stammenden Protease hydrolysiert und die Mischung durch Dampfeinepritzung thermisch behandelt.

4. Verfahren nach Anspruch 3, in dem man die Mischung 5-15 min bei einem pH von 6,0-11,0 bei 50-75°C hydrolysiert, sie durch Einspritzung von Dampf mit 140-160°C während 30 s bis 2 min thermisch behandelt und sie 5-30 s auf einer mit Sattdampf auf 170-195°C erhitzten Walze trocknet.

5. Pflanzliche Pulvermilch, die in dem Verfahren nach einem der Ansprüche 1 bis 4 hergestellt werden kann.

6. Pflanzliche Pulvermilch nach Anspruch 5, die einen Gehalt an Proteinen und an Lipiden besitzt, der dem von Kuhmilch, insbesondere von Voll- oder Magermilch, ähnlich ist.

7. Verwendung einer Milch nach einem der Ansprüche 5 und 6 für die Herstellung eines Nahrungsmittelprodukts.
